# EUROPEAN PATENT APPLICATION

(11) **EP 4 794 156 A1**
(43) Date of publication of application: **19.08.2026**
(21) Application number: 24875924.3
(22) Date of filing: 11.03.2024
(51) Int. Cl.: H02J 3/32

(54) **ENERGY STORAGE SYSTEM AND CONTROL METHOD FOR ENERGY STORAGE SYSTEM**

(30) Priority: 10.10.2023 CN 202311315058
(71) Applicant: Sungrow Power Supply Co., Ltd., Hefei, Anhui 230088 (CN)
(72) Inventor: ZHENG, Feiyang, Hefei, Anhui 230088 (CN); LU, Rui, Hefei, Anhui 230088 (CN); ZHANG, Yao, Hefei, Anhui 230088 (CN); ZHOU, Shun, Hefei, Anhui 230088 (CN); LI, Kangjie, Hefei, Anhui 230088 (CN)
(74) Representative: Epping - Hermann - Fischer
(86) International application number: PCT/CN2024/080918
(87) International publication number: WO 2025/077095

(57) **Abstract**

The present application provides an energy storage system and a control method for the energy storage system, applied to the technical field of energy storage. The energy storage system comprises a plurality of battery clusters and a plurality of control units, and the battery clusters are in one-to-one correspondence with the control units. Each control unit is used for: when a battery parameter is not lower than a first battery parameter, controlling the corresponding battery cluster to discharge at constant current; and when the battery parameter is lower than the first battery parameter, controlling the corresponding battery cluster to charge at constant current, wherein the first battery parameter is a battery parameter when the capacity of the battery cluster reaches a safe capacity lower limit. By controlling the battery clusters meeting conditions in the energy storage system to charge or discharge at the same constant current, the output power or input power of the energy storage system reaches the maximum power that the energy storage system can currently reach.

## Description

This application claims the priority to Chinese Patent Application No. 202311315058.0, titled "ENERGY STORAGE SYSTEM AND CONTROL METHOD FOR ENERGY STORAGE SYSTEM", filed on October 10, 2023 with the China National Intellectual Property Administration, which is incorporated herein by reference in its entirety.

### FIELD

The present disclosure relates to the technical field of energy storage systems, and in particular to an energy storage system and a method for controlling the energy storage system.

### BACKGROUND

As a key technology supporting the development of renewable energy, energy storage systems have encountered substantial opportunities for development. Energy storage technology can not only serve as ancillary means for renewable energy to maintain grid load and stability, but also be used independently to improve an energy structure.

In related large-scale energy storage systems, state of charge (SOC) of each battery cluster is collected in real time, based on which charging and discharging power of each battery cluster is dynamically adjusted. However, apart from being determined by a calculation of the energy storage system, the charging and discharging power of the battery cluster is constrained by hardware performance of a converter. As a result, the battery cluster may be unable to operate at a target power assigned by the energy storage system, ultimately preventing the system from achieving its maximum charging and discharging power.

Moreover, due to the enormous scale of large energy storage systems and the substantial number of battery clusters, balancing the charging and discharging power of each battery cluster through real-time dynamic adjustment imposes significant challenges on the accuracy of SOC acquisition as well as on the computational capability of the processor.

### SUMMARY

In view of this, an energy storage system and a method for controlling the energy storage system are provided in embodiments of the present disclosure, aiming to support the energy storage system to perform charging and discharging at maximum power to the greatest extent.

In a first aspect, an energy storage system is provided according to embodiments of the present disclosure. The energy storage system includes multiple battery clusters and multiple control units, and the multiple battery clusters are in one-to-one correspondence with the multiple control units. Each of the multiple control units is configured to: obtain a battery parameter of a corresponding battery cluster, control the corresponding battery cluster to perform constant-current discharging in response to the battery parameter being greater than or equal to a first battery parameter, and control the corresponding battery cluster to perform constant-current charging in response to the battery parameter being less than the first battery parameter, to raise the battery parameter to reach a second battery parameter. The first battery parameter is a battery parameter at which a capacity of the corresponding battery cluster reaches a lower limit of a safe capacity, and the second battery parameter is a battery parameter at which the capacity of the corresponding battery cluster reaches an upper limit of the safe capacity.

In an embodiment, in response to the battery parameter being less than the first battery parameter, each of the multiple the control units is configured to: compare an average input current of the energy storage system with a maximum charging current of the control unit, where the average input current of the energy storage system is determined based on an input current of the energy storage system and the number of battery clusters of which a battery parameter is less than the first battery parameter; control the corresponding battery cluster to perform constant-current charging at the maximum charging current in response to the average input current of the energy storage system being greater than the maximum charging current; and control the corresponding battery cluster to perform constant-current charging at the average input current of the energy storage system in response to the average input current of the energy storage system being less than or equal to the maximum charging current.

In an embodiment, in response to the battery parameter being greater than or equal to the first battery parameter, each of the multiple the control units is configured to: compare an average output current of the energy storage system with a maximum discharging current of the control unit, where the average output current of the energy storage system is determined based on an output current of the energy storage system and the number of battery clusters of which a battery parameter is greater than or equal to the first battery parameter; control the corresponding battery cluster to perform constant-current discharging at the maximum discharging current in response to the average output current of the energy storage system being greater than the maximum discharging current; and control the corresponding battery cluster to perform constant-current discharging at the average output current of the energy storage system in response to the average output current of the energy storage system being less than or equal to the maximum discharging current.

In an embodiment, in response to the battery parameter being greater than or equal to the second battery parameter, each of the multiple the control units is further configured to control the corresponding battery cluster to stop charging.

In an embodiment, in response to the battery parameter being less than the first battery parameter, each of the multiple the control units is further configured to control the corresponding battery cluster to stop discharging.

In an embodiment, each of the multiple the control units is a DC-DC control unit, an input current of the energy storage system is determined based on a DC bus voltage and an input power of the energy storage system, and an output current of the energy storage system is determined based on the DC bus voltage and an output power of the energy storage system.

In an embodiment, each of the multiple control units is a PCS control unit, an input current of the energy storage system is determined based on a line voltage of the energy storage system and an input power of the energy storage system, and an output current of the energy storage system is determined based on the line voltage of the energy storage system and an output power of the energy storage system.

In an embodiment, each of the multiple control units is a PCS control unit, an input current of the energy storage system is determined based on a phase voltage of the energy storage system and an input power of the energy storage system, and an output current of the energy storage system is determined based on the phase voltage of the energy storage system and an output power of the energy storage system.

In a second aspect, a method for controlling an energy storage system is provided according to embodiments of the present disclosure. The energy storage system includes multiple battery clusters and multiple control units, and the multiple battery clusters are in one-to-one correspondence with the multiple control units. The method includes: obtaining a battery parameter of a battery cluster; controlling the battery cluster to perform constant-current discharging in response to the battery parameter being greater than or equal to a first battery parameter, and controlling the battery cluster to perform constant-current charging in response to the battery parameter being less than the first battery parameter, to raise the battery parameter to reach a second battery parameter, where the first battery parameter is a battery parameter at which a capacity of the battery cluster reaches a lower limit of a safe capacity, and the second battery parameter is a battery parameter at which the capacity of the battery cluster reaches an upper limit of the safe capacity.

In an embodiment, the controlling the battery cluster to perform constant-current charging in response to the battery parameter being less than the first battery parameter includes: comparing an average input current of the energy storage system with a maximum charging current of a control unit corresponding to the battery cluster, where the average input current of the energy storage system is determined based on an input current of the energy storage system and the number of battery clusters of which a battery parameter is less than the first battery parameter; controlling the battery cluster to perform constant-current charging at the maximum charging current in response to the average input current of the energy storage system being greater than the maximum charging current; and controlling the battery cluster to perform constant-current charging at the average input current of the energy storage system in response to the average input current of the energy storage system being less than or equal to the maximum charging current.

In an embodiment, the controlling the battery cluster to perform constant-current discharging in response to the battery parameter being greater than or equal to the first battery parameter includes: comparing an average output current of the energy storage system with a maximum discharging current of the each of the multiple control units, where the average output current of the energy storage system is determined based on an output current of the energy storage system and the number of battery clusters of which a battery parameter is greater than or equal to the first battery parameter; controlling the battery cluster to perform constant-current discharging at the maximum charging current in response to the average output current of the energy storage system being greater than the maximum discharging current; and controlling the battery cluster to perform constant-current discharging at the average output current of the energy storage system in response to the average output current of the energy storage system being less than or equal to the maximum discharging current.

In an embodiment, the method further includes: in response to the battery parameter being greater than or equal to the second battery parameter, controlling, by each of the multiple control units, the battery cluster to stop charging.

In an embodiment, the method further includes: in response to the battery parameter being less than the first battery parameter, controlling, by each of the multiple control units, the battery cluster to stop discharging.

In an embodiment, each of the multiple control units is a DC-DC control unit, an input current of the energy storage system is determined based on a DC bus voltage and an input power of the energy storage system, and an output current of the energy storage system is determined based on the DC bus voltage and an output power of the energy storage system.

In an embodiment, each of the multiple control units is a PCS control unit, an input current of the energy storage system is determined based on a line voltage of the energy storage system and an input power of the energy storage system, and an output current of the energy storage system is determined based on the line voltage of the energy storage system and an output power of the energy storage system.

In an embodiment, each of the multiple control units is a PCS control unit, an input current of the energy storage system is determined based on a phase voltage of the energy storage system and an input power of the energy storage system, and an output current of the energy storage system is determined based on the phase voltage of the energy storage system and an output power of the energy storage system.

In a third aspect, a device is provided according to embodiments of the present disclosure. The device includes a memory and a processor. The memory is configured to store instructions or code. The processor is configured to execute the instructions or code to cause the device to perform the method according to any one of the aforementioned embodiments in the second aspect.

In a fourth aspect, a computer storage medium is provided according to embodiments of the present disclosure. The computer storage medium stores code which, when executed by a device, cause the device to perform the method according to any one of the aforementioned embodiments in the second aspect.

An energy storage system and a method for controlling an energy storage system are provided according to the embodiments of the present disclosure. The energy storage system includes multiple battery clusters and multiple control units, and the multiple battery clusters are in one-to-one correspondence with the multiple control units. A battery parameter of a corresponding battery cluster is obtained by a control unit. Based on a comparison result between the battery parameter and a first battery parameter, the corresponding battery cluster is controlled to perform constant-current charging or constant-current discharging. In this way, by controlling battery clusters that meet a condition in the energy storage system to perform charging or discharging at a same constant current, input power or output power of the energy storage system can reach a maximum power that the current energy storage system can achieve. Moreover, each battery cluster is charged or discharged under one-to-one control by the corresponding control unit, without the need to set up a processor to perform unified balancing calculations based on battery data of all battery clusters, reducing the requirements for the accuracy of SOC acquisition as well as for the computational capability of the processor.

### BRIEF DESCRIPTION OF THE DRAWINGS

In order to more clearly describe technical solutions in embodiments of the present disclosure or in related technology, the drawings to be used in the description of the embodiments or the related technology are briefly described below. Apparently, the drawings described in the following description show only some embodiments of the present disclosure, and other drawings may be obtained by those skilled in the art from the drawings without any creative effort.
FIG. 1 is a schematic structural diagram of an energy storage system according to an embodiment of the present disclosure;
FIG. 2 is a schematic structural diagram of an energy storage system according to another embodiment of the present disclosure;
FIG. 3 is a schematic structural diagram of an energy storage system according to another embodiment of the present disclosure; and
FIG. 4 is a flowchart of a method for controlling an energy storage system according to an embodiment of the present disclosure.

### DETAILED DESCRIPTION

In the control of related energy storage systems, state of charge (SOC) of each battery cluster is collected, then calculations are performed based on the SOC of each battery cluster, and different powers are assigned to each battery cluster for charging and discharging according to the difference in SOC. Taking a discharging process of the energy storage system as an example, battery clusters with lower SOC are assigned smaller discharge power, and battery clusters with higher SOC are assigned larger discharge power. However, limited by the hardware performance of the battery cluster or the converter, a battery cluster that is allocated a larger discharging power may be unable to reach the allocated discharging power during actual discharging process. As a result, the actual discharging power of the energy storage system is lower than the maximum discharging power that the system is capable of delivering.

In view of the above technical problems, an energy storage system and a control method for the energy storage system are provided in embodiments of the present disclosure. Control units are provided in one-to-one correspondence with the battery clusters, and each control unit directly controls the corresponding battery cluster to perform constant-current charging or constant-current discharging based on battery data of the corresponding battery cluster, rather than dynamically allocating power in a balanced manner according to SOC. In this way, the allocated power of a battery cluster is prevented form exceeding the maximum power of the battery cluster or the converter, thereby enabling the energy storage system to reach the maximum power currently achievable.

It should be noted that the described embodiments in the present disclosure are only a part of the embodiments of the present disclosure and not all of the embodiments. Based on the embodiments of the present disclosure, all other embodiments obtained by those skilled in the art without any creative work fall into the protection scope of the present disclosure.

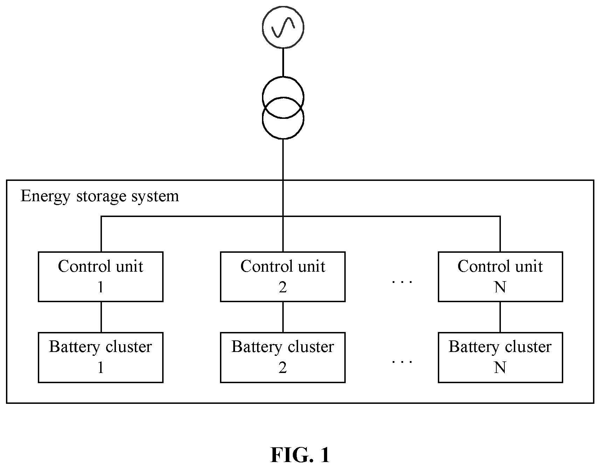

Reference is made to FIG. 1, which is a schematic structural diagram of an energy storage system according to an embodiment of the present disclosure. The energy storage system includes multiple battery clusters and multiple control units, and the battery clusters are in one-to-one correspondence with the control units. The energy storage system is connected to the power grid through a transformer.

In an embodiment of the present disclosure, a control unit may obtain a battery parameter of a corresponding battery cluster.

The corresponding battery cluster is controlled to perform constant-current discharging in response to the battery parameter being greater than or equal to a first battery parameter, and the corresponding battery cluster is controlled to perform constant-current charging in response to the battery parameter being less than the first battery parameter, so that the battery parameter reaches a second battery parameter.

The battery parameter may reflect an energy storage state of the battery cluster, such as a battery voltage or a battery capacity. The first battery parameter is a battery parameter at which a capacity of the battery cluster reaches a lower limit of a safe capacity, and the second battery parameter is a battery parameter at which the capacity of the battery cluster reaches an upper limit of the safe capacity. Correspondingly, the second battery parameter is a battery parameter at which the capacity of the battery cluster reaches an upper limit of the safe capacity. It can be understood that the safe capacity of the battery cluster may be set by a technician based on performance of the battery cluster. For example, 20% to 90% of the battery capacity is regards as the safe capacity, then the first battery parameter is the battery parameter at which the capacity of the battery cluster reaches 20%, and the first battery parameter is the battery parameter at which the capacity of the battery cluster reaches 90%. Alternatively, the safe capacity of the battery cluster may be set based on SOC. For example, when the SOC is 0.9, the capacity of the battery cluster is an upper limit of the safe capacity, and when the SOC is 0.2, the capacity of the battery cluster is a lower limit of the safe capacity.

To illustrate the embodiments of the present disclosure, the battery voltage is employed as the battery cluster, the first battery voltage serves as the first battery parameter, and the second battery voltage serves as the second battery parameter.

If the battery voltage is less than the first battery voltage, it indicates that the capacity of the battery cluster is too low to provide output by discharging. When the energy storage system is in a charging state, the controller controls the magnitude of the current such that the battery cluster performs constant-current charging. If the battery voltage is greater than or equal to the first battery voltage, it indicates that the battery cluster has sufficient capacity to provide output. When the energy storage system is in a discharging state, the controller controls the magnitude of the current such that the battery cluster performs constant-current discharging. By controlling each battery cluster to perform constant-current charging and discharging, capacity balancing of multiple battery clusters can be achieved during charging and discharging cycles.

The energy storage system includes multiple battery clusters, and different battery clusters may have different capacities. It may be determined whether a battery cluster is capable of discharging or needs to be charged through the controller. During discharging of the energy storage system, all battery clusters capable of discharging are controlled to discharge at the same constant current, thereby preventing the allocated discharging power from exceeding the performance of each battery cluster. During charging of the energy storage system, all battery clusters that need to be charged are controlled to charge at the same constant current, thereby preventing the allocated charging power from exceeding the performance of each battery cluster. In this way, the energy storage system can operate at the maximum charging power or maximum discharging power currently available.

In an embodiment of the present disclosure, the control unit, in response to the battery parameter being less than the first battery parameter, may be configured to: compare an average input current of the energy storage system with a maximum charging current of the control unit; control the corresponding battery cluster to perform constant-current charging at the maximum charging current in response to the average input current of the energy storage system being greater than the maximum charging current; and control the corresponding battery cluster to perform constant-current charging at the average input current of the energy storage system in response to the average input current of the energy storage system being less than or equal to the maximum charging current.

The average input current of the energy storage system is determined based on an input current of the energy storage system and the number of battery clusters of which a battery parameter is less than the first battery parameter. It is assumed that the energy storage system includes M battery clusters, and that N battery clusters among the M battery clusters have battery parameters being less than the first battery parameter. An average input current of the energy storage system is denoted as I1, and an input current of the energy storage system is denoted as I2, where I2=I1*N. A maximum charging current of the control unit is denoted as Iin.

When the average input current I1 of the energy storage system is greater than the maximum charging current Iin, it indicates that the average input current of the energy storage system exceeds the maximum current that can be input to the battery cluster or the control unit. In this case, the corresponding battery cluster is controlled to perform constant-current charging at the maximum charging current in Iin.

When the average input current I1 of the energy storage system is less than or equal to the maximum charging current Iin, it indicates that the average input current I1 of the energy storage system is within the input current range that can be input to the battery cluster or the control unit. In this case, the corresponding battery cluster is controlled to perform constant-current charging at the average input current I1 of the energy storage system.

In addition, when the average input current I1 of the energy storage system is less than or equal to the maximum charging current Iin, if the battery cluster is controlled to perform constant-current charging at the maximum charging current Iin, the total charging current supplied to the battery cluster would exceed the average input current of the energy storage system. In other words, the energy storage system would not be capable of supplying the battery cluster to perform charging at the average input current of the energy storage system. Therefore, the corresponding battery cluster is controlled to perform constant-current charging at the average input current I1 of the energy storage system. Through the above charging process, the energy storage system can perform charging at a maximum charging power that the system can bear.

In an embodiment of the present disclosure, the control unit, in response to the battery parameter being greater than or equal to the first battery parameter, may be configured to: compare an average output current of the energy storage system with a maximum discharging current of the control unit; control the corresponding battery cluster to perform constant-current discharging at the maximum discharging current in response to the average output current of the energy storage system being greater than the maximum discharging current; and control the corresponding battery cluster to perform constant-current discharging at the average output current of the energy storage system in response to the average output current of the energy storage system being less than or equal to the maximum discharging current.

The average output current of the energy storage system is determined based on an output current of the energy storage system and the number of battery clusters of which a battery parameter is greater than or equal to the first battery parameter. It is assumed that the energy storage system includes M battery clusters, and that N battery clusters among the M battery clusters have battery parameters being greater than or equal to the first battery parameter. An average output current of the energy storage system is denoted as I3, and an output current of the energy storage system is denoted as I4, where I4=I3*N. A maximum discharging current of the control unit is denoted as Iout.

When the average output current I3 of the energy storage system is greater than the maximum discharging current Iout, it indicates that the average output current I3 of the energy storage system is greater than the maximum current that can be output by the battery cluster or the control unit. In this case, the corresponding battery cluster is controlled to perform constant-current discharging at the maximum discharging current in Iout. When all battery clusters capable of discharging discharge at the maximum discharging current Iout, the output power of the energy storage system reaches the maximum output power.

When the average output current I3 of the energy storage system is less than or equal to the maximum discharging current Iout, it indicates that the average output current I3 of the energy storage system is within the current range that can be input to the battery cluster or the control unit. In this case, the corresponding battery cluster is controlled to perform constant-current discharging at the average output current I3 of the energy storage system. When all battery clusters capable of discharging discharge at the average output current I3 of the energy storage system, the total discharging currents of the battery clusters are sufficient to meet the discharging demand of the energy storage system.

Through the above charging and discharging process, after one charging cycle or discharging cycle, energy balance among the battery clusters in the energy storage system can be achieved, so that the state of charge of each battery cluster tends to become uniform and the difference in the state of charge is minimized. After a discharging cycle, battery clusters with originally lower state of charge do not discharge, while battery clusters with originally higher state of charge continue to discharge at a constant current, thereby reducing the difference in the state of charge among the battery clusters. After a charging cycle, battery clusters with originally lower state of charge continue to charge at a constant current, which similarly reduces the difference in the state of charge with battery clusters that originally have higher state of charge. Ultimately, energy balance among the battery clusters is achieved.

In the embodiment of the present disclosure, in order to protect the battery clusters, when the battery parameter is greater than or equal to the second battery parameter, the control unit is further configured to control the corresponding battery cluster to stop charging. When the battery parameter is less than the first battery parameter, the control unit is further configured to control the corresponding battery cluster to stop discharging.

When the capacity of a battery cluster after charging reaches the upper limit of the safe capacity, the controller controls the battery cluster to stop charging, thereby preventing overcharging that may damage the battery cluster. When the capacity of a battery cluster after discharging reaches the lower limit of the safe capacity, the controller controls the battery cluster to stop discharging, thereby preventing over-discharge that may impair the energy storage capability of the battery cluster.

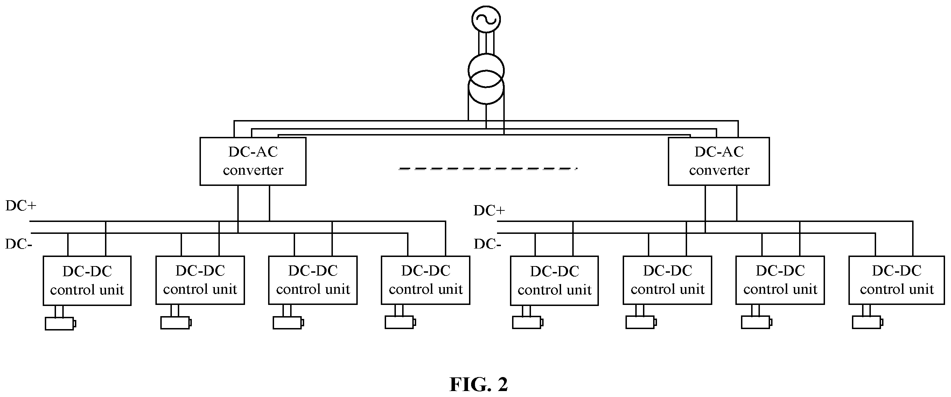

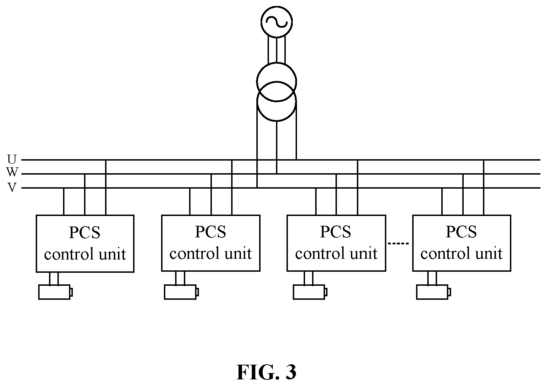

In the embodiment of the present disclosure, the control unit may be a DC-DC control unit or an energy storage converter (power conversion system, PCS, control unit). The PSC control unit is as illustrated in FIG. 2 and FIG. 3. FIG. 2 is a schematic structural diagram of an energy storage system according to another embodiment of the present disclosure, and FIG. 3 is a schematic structural diagram of an energy storage system according to another embodiment of the present disclosure.

In FIG. 2, when the control unit is a DC-DC control unit, since the current output by the DC-DC control unit is direct current while the current in the power grid is alternating current, a DC-AC converter may be arranged between the DC-DC control unit and the transformer to convert the direct-current output of the DC-DC control unit into alternating current. The DC-AC converter and the DC-DC control unit may be in a one-to-one relationship or in a one-to-many relationship.

In FIG. 3, when the control unit is a PCS control unit, it may be directly connected to the transformer since the current output by the PCS control unit is alternating current. In FIG. 3, U, V, and W represent the three phases of the power grid.

When the control unit is a DC-DC control unit, the input current of the energy storage system is determined based on a direct-current bus voltage and an input power of the energy storage system, and an output current of the energy storage system is determined based on the direct-current bus voltage and an output power of the energy storage system. The output power of the energy storage system is related to a power demand of the power grid, and the output power of the energy storage system is less than or equal to the maximum output power that the energy storage system can provide.

When the control unit is a PCS control unit, the input current of the energy storage system is determined based on a line voltage of the energy storage system and an input power of the energy storage system, and an output current of the energy storage system is determined based on the line voltage of the energy storage system and an output power of the energy storage system.

Alternatively, the input current of the energy storage system is determined based on a phase voltage of the energy storage system and an input power of the energy storage system, and an output current of the energy storage system is determined based on the phase voltage of the energy storage system and an output power of the energy storage system.

With the energy storage system described above, by controlling battery clusters that meet a condition in the energy storage system to perform charging or discharging at a same constant current, input power or output power of the energy storage system can reach a maximum power that the current energy storage system can achieve. Moreover, each battery cluster is charged or discharged under one-to-one control by the corresponding control unit, without the need to set up a processor to perform unified balancing calculations based on battery data of all battery clusters, reducing the requirements for the accuracy of SOC acquisition as well as for the computational capability of the processor.

In the embodiment of the present disclosure, a method for controlling an energy storage system is provided. The method may be performed by the control unit described above or a server.

The energy storage system includes multiple battery clusters and multiple control units, and the multiple battery clusters are in one-to-one correspondence with the multiple control units.

The method includes:
obtaining a battery parameter of a battery cluster;
controlling the battery cluster to perform constant-current discharging in response to the battery parameter being greater than or equal to a first battery parameter; and
controlling the battery cluster to perform constant-current charging in response to the battery parameter being less than the first battery parameter, where the first battery parameter is a battery parameter at which a capacity of the battery cluster reaches a lower limit of a safe capacity.

By controlling battery clusters that meet a condition in the energy storage system to perform charging or discharging at a same constant current, input power or output power of the energy storage system can reach a maximum power that the current energy storage system can achieve. Moreover, each battery cluster is charged or discharged under one-to-one control by the corresponding control unit, without the need to set up a processor to perform unified balancing calculations based on battery data of all battery clusters, reducing the requirements for the accuracy of SOC acquisition as well as for the computational capability of the processor.

In the embodiment of the present disclosure, the controlling the battery cluster to perform constant-current charging in response to the battery parameter being less than the first battery parameter includes:
comparing an average input current of the energy storage system with a maximum charging current of a control unit corresponding to the battery cluster, where the average input current of the energy storage system is determined based on an input current of the energy storage system and the number of battery clusters of which a battery parameter is less than the first battery parameter;
controlling the battery cluster to perform constant-current charging at the maximum charging current in response to the average input current of the energy storage system being greater than the maximum charging current; and
controlling the battery cluster to perform constant-current charging at the average input current of the energy storage system in response to the average input current of the energy storage system being less than or equal to the maximum charging current.

In the embodiment of the present disclosure, the controlling the battery cluster to perform constant-current discharging in response to the battery parameter being greater than or equal to the first battery parameter includes:
comparing an average output current of the energy storage system with a maximum discharging current of a control unit corresponding to the battery cluster, where the average output current of the energy storage system is determined based on an output current of the energy storage system and the number of battery clusters of which a battery parameter is greater than or equal to the first battery parameter; and
controlling the battery cluster to perform constant-current discharging at the maximum charging current in response to the average output current of the energy storage system being greater than the maximum discharging current; and
controlling the battery cluster to perform constant-current discharging at the average output current of the energy storage system in response to the average output current of the energy storage system being less than or equal to the maximum discharging current.

In the embodiment of the present disclosure, the method further includes:
controlling the battery cluster to stop charging by the control unit corresponding to the battery cluster, in response to the battery parameter being greater than or equal to the second battery parameter, where the second battery parameter is a battery parameter at which the capacity of the battery cluster reaches an upper limit of the safe capacity.

In the embodiment of the present disclosure, the method further includes:
controlling the corresponding battery cluster to stop discharging by the control unit corresponding to the battery cluster, in response to the battery parameter being less than the first battery parameter.

In the embodiment of the present disclosure, the control unit is a DC-DC control unit, the input current of the energy storage system is determined based on a direct-current bus voltage and an input power of the energy storage system, and an output current of the energy storage system is determined based on the direct-current bus voltage and an output power of the energy storage system.

In the embodiment of the present disclosure, the control unit is a PCS control unit, the input current of the energy storage system is determined based on a line voltage of the energy storage system and an input power of the energy storage system, and an output current of the energy storage system is determined based on the line voltage of the energy storage system and an output power of the energy storage system.

In the embodiment of the present disclosure, the control unit is a PCS control unit, the input current of the energy storage system is determined based on a phase voltage of the energy storage system and an input power of the energy storage system, and an output current of the energy storage system is determined based on the phase voltage of the energy storage system and an output power of the energy storage system.

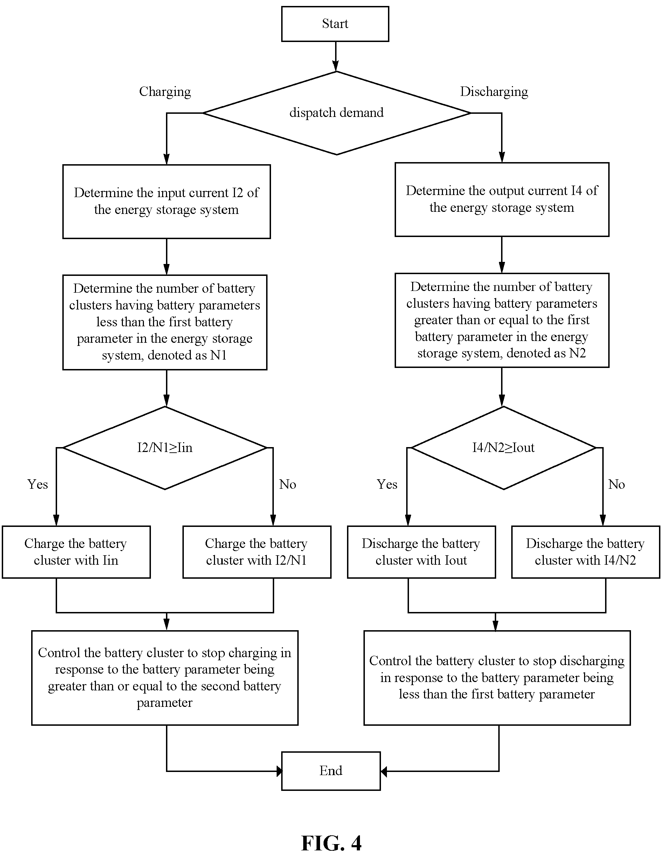

Hereinafter, the control unit is taken as the executing entity, and the method for controlling the energy storage system provided in the present disclosure is described with reference to FIG. 4, which is a flowchart of a method for controlling an energy storage system according to an embodiment of the present disclosure.

After receiving a dispatch demand from the power grid, the control unit in the energy storage system determines whether the energy storage system is to perform a charging action or a discharging action, and simultaneously may determine an output current I4 or an input current I2 of the energy storage system.

When the dispatch demand instructs the energy storage system to perform the charging action, the number of battery clusters of which a battery parameter is less than the first battery parameter in the energy storage system is determined and denoted as N1. A determination step is then performed to compare an average input current I1, obtained by evenly distributing the input current I2 to the N1 battery clusters, with a maximum input current Iin of the control unit. If the average input current I1 is greater than or equal to the maximum input current Iin, the battery clusters are controlled to perform charging at the maximum input current Iin. If the average input current I1 is less than the maximum input current Iin, the battery clusters are controlled to perform charging at the average input current I1. When the battery parameter of a battery cluster is greater than or equal to the second battery parameter, the battery cluster is controlled to stop charging.

When the dispatch demand instructs the energy storage system to perform the discharging action, the number of battery clusters having battery parameters greater than or equal to the first battery parameter in the energy storage system is determined and denoted as N2. A determination step is then performed to compare an average output current I3, obtained by evenly distributing the output current I4 to the N2 battery clusters, with a maximum output current Iout of the control unit. If the average output current I3 is greater than or equal to the maximum output current Iout, the battery clusters are controlled to perform discharging at the maximum output current Iout. If the average output current I3 is less than the maximum output current Iout, the battery clusters are controlled to perform discharging at the average output current I3. When the battery parameter of a battery cluster is less than or equal to the first battery parameter, the battery cluster is controlled to stop discharging.

By controlling battery clusters that meet a condition in the energy storage system to perform charging or discharging at a same constant current, input power or output power of the energy storage system can reach a maximum power that the current energy storage system can achieve. Moreover, each battery cluster is charged or discharged under one-to-one control by the corresponding control unit, without the need to set up a processor to perform unified balancing calculations based on battery data of all battery clusters, reducing the requirements for the accuracy of SOC acquisition as well as for the computational capability of the processor.

A corresponding device and computer storage medium are further provided in an embodiment of the present disclosure, to implement the solutions provided in the embodiments of the present disclosure.

The device includes a memory and a processor. The memory is configured to store instructions or code. The processor is configured to execute the instructions or code, so that the device performs the method for controlling an energy storage system according to any embodiment of the present disclosure.

The computer storage medium has code stored thereon. When the code is executed, the device executing the code performs the method for controlling an energy storage system according to any embodiment of the present disclosure.

The expressions "first", "second" (if any) described in the embodiments of the present disclosure are merely used for identification purposes, rather than indicating the first or the second in a sequence.

From the above embodiments, those skilled in the art can clearly appreciate that all or a part of steps in the method according to the above embodiments may be implemented by means of software and a general hardware platform. Based on such understanding, technical solutions of the present disclosure may be embodied as a software product. The computer software product may be stored in a storage medium, such as a read-only memory (ROM)/RAM, a magnetic disc, or an optical disk, and the computer software product includes multiple instructions for enabling a computer device (which may be a personal computer, a server, or a network communication device such as a router) to perform the methods described in various embodiments or some parts of the embodiments of the present disclosure.

The embodiments in this specification are described in a progressive manner. Various embodiments may refer to each other for the same or similar parts, and each embodiment focuses on the difference from other embodiments. The apparatus embodiments are essentially similar to the method embodiments, and therefore are described in brief. Reference may be made to the description of the method embodiments for relevant details of the apparatus embodiments. Some or all of the modules may be selected as needed to achieve the objective of the solution of the embodiments. Those skilled in the art can understand and implement the solution without any creative effort.

The foregoing descriptions are only exemplary embodiments of the present disclosure, and are not intended to limit the protection scope of the present disclosure.

## Claims

1. An energy storage system, comprising:
a plurality of battery clusters; and
a plurality of control units;
wherein the plurality of battery clusters is in one-to-one correspondence with the plurality of control units;
wherein each of the plurality of control units is configured to: obtain a battery parameter of a corresponding battery cluster, control the corresponding battery cluster to perform constant-current discharging in response to the battery parameter being greater than or equal to a first battery parameter, and control the corresponding battery cluster to perform constant-current charging in response to the battery parameter being less than the first battery parameter, to raise the battery parameter to reach a second battery parameter;
wherein the first battery parameter is a battery parameter at which a capacity of the corresponding battery cluster reaches a lower limit of a safe capacity, and the second battery parameter is a battery parameter at which the capacity of the corresponding battery cluster reaches an upper limit of the safe capacity.

2. The energy storage system according to claim 1, wherein in response to the battery parameter being less than the first battery parameter, each of the plurality of the control units is configured to:
compare an average input current of the energy storage system with a maximum charging current of the control unit, wherein the average input current of the energy storage system is determined based on an input current of the energy storage system and the number of battery clusters of which a battery parameter is less than the first battery parameter;
control the corresponding battery cluster to perform constant-current charging at the maximum charging current in response to the average input current of the energy storage system being greater than the maximum charging current; and
control the corresponding battery cluster to perform constant-current charging at the average input current of the energy storage system in response to the average input current of the energy storage system being less than or equal to the maximum charging current.

3. The energy storage system according to claim 2, wherein in response to the battery parameter being greater than or equal to the first battery parameter, each of the plurality of the control units is configured to:
compare an average output current of the energy storage system with a maximum discharging current of the control unit, wherein the average output current of the energy storage system is determined based on an output current of the energy storage system and the number of battery clusters of which a battery parameter is greater than or equal to the first battery parameter;
control the corresponding battery cluster to perform constant-current discharging at the maximum discharging current in response to the average output current of the energy storage system being greater than the maximum discharging current; and
control the corresponding battery cluster to perform constant-current discharging at the average output current of the energy storage system in response to the average output current of the energy storage system being less than or equal to the maximum discharging current.

4. The energy storage system according to claim 3, wherein in response to the battery parameter being greater than or equal to the second battery parameter, each of the plurality of the control units is further configured to:
control the corresponding battery cluster to stop charging.

5. The energy storage system according to claim 4, wherein in response to the battery parameter being less than the first battery parameter, each of the plurality of the control units is further configured to:
control the corresponding battery cluster to stop discharging.

6. The energy storage system according to any one of claims 2 to 5, wherein each of the plurality of the control units is a DC-DC control unit, an input current of the energy storage system is determined based on a DC bus voltage and an input power of the energy storage system, and an output current of the energy storage system is determined based on the DC bus voltage and an output power of the energy storage system.

7. The energy storage system according to any one of claims 2 to 5, wherein each of the plurality of the control units is a PCS control unit, an input current of the energy storage system is determined based on a line voltage of the energy storage system and an input power of the energy storage system, and an output current of the energy storage system is determined based on the line voltage of the energy storage system and an output power of the energy storage system.

8. The energy storage system according to any one of claims 2 to 5, wherein each of the plurality of the control units is a PCS control unit, an input current of the energy storage system is determined based on a phase voltage of the energy storage system and an input power of the energy storage system, and an output current of the energy storage system is determined based on the phase voltage of the energy storage system and an output power of the energy storage system.

9. A method for controlling an energy storage system, wherein the energy storage system comprises a plurality of battery clusters and a plurality of control units, and the plurality of battery clusters is in one-to-one correspondence with the plurality of control units;
wherein the method comprises:
obtaining a battery parameter of a battery cluster;
controlling the battery cluster to perform constant-current discharging in response to the battery parameter being greater than or equal to a first battery parameter; and
controlling the battery cluster to perform constant-current charging in response to the battery parameter being less than the first battery parameter, to raise the battery parameter to reach a second battery parameter, wherein the first battery parameter is a battery parameter at which a capacity of the battery cluster reaches a lower limit of a safe capacity, and the second battery parameter is a battery parameter at which the capacity of the battery cluster reaches an upper limit of the safe capacity.

10. The method according to claim 9, wherein the controlling the battery cluster to perform constant-current charging in response to the battery parameter being less than the first battery parameter comprises:
comparing an average input current of the energy storage system with a maximum charging current of a control unit corresponding to the battery cluster, wherein the average input current of the energy storage system is determined based on an input current of the energy storage system and the number of battery clusters of which a battery parameter is less than the first battery parameter;
controlling the battery cluster to perform constant-current charging at the maximum charging current in response to the average input current of the energy storage system being greater than the maximum charging current; and
controlling the battery cluster to perform constant-current charging at the average input current of the energy storage system in response to the average input current of the energy storage system being less than or equal to the maximum charging current.
